# EUROPÄISCHE PATENTSCHRIFT

(11) **EP 1 512 616 B1**
(45) Veröffentlichungstag und Bekanntmachung des Hinweises auf die Patenterteilung: **29.08.2007**
(21) Anmeldenummer: 04104257.3
(22) Anmeldetag: 03.09.2004
(51) Int. Cl.: B62D 27/06, B62D 65/00, F16B 5/02

(54) **Vorrichtung zur relativen Justage eines Bauteils und zur vorübergehenden Halterung eines Befestigungselements**
Device for relative adjustment of a component and for temporary holding of an attachment element
Dispositif d'ajustement relatif d'un élément et de maintien temporaire d'un dispositif de fixation

(30) Priorität: 05.09.2003 US 656788
(43) Veröffentlichungstag der Anmeldung: 09.03.2005
(73) Patentinhaber: DEERE & COMPANY, Moline, Illinois 61265-8098 (US)
(72) Erfinder: Boyce, Dean Arden, Waterloo, IA 50702 (US)
(74) Vertreter: Holst, Sönke

(56) Entgegenhaltungen:
- DE-A- 3 718 089
- DE-C- 869 575
- DE-U- 8 524 089

## Beschreibung

Die Erfindung betrifft eine Vorrichtung zur Justage eines Bauteils relativ zu einem anderen Bauteil und zur vorübergehenden Halterung eines Befestigungselements. Vorrichtungen dieser Art wie zum Beispiel in der Gebrauchsmuster DE 8524089 offenbart, werden insbesondere zur vorübergehenden Halterung eingesetzt, wenn mehrere Bauteile zu montieren und relativ zueinander zu justieren bzw. auszurichten sind, beispielsweise einzelne Bauteile eines Fahrzeugs, insbesondere einer Fahrzeugkarosserie.

Bei der Produktion von Fahrzeugen ist es oft wünschenswert und/oder erforderlich, zwischen mehreren Fahrzeugteilen eine bestmögliche Passgenauigkeit zu erzielen, um eine Allwettertauglichkeit sicherzustellen oder um ästhetische, aerodynamische oder andere Zwecke zu erfüllen. Aufgrund von Ungenauigkeiten beim Herstellungsprozess und der hieraus resultierenden Toleranzensummierung mehrerer Fahrzeugteile ist es oftmals erforderlich, mehrere Einstellungen bzw. Justagen bei der Montage der Fahrzeugteile durchzuführen, um für jedes Fahrzeug die bestmögliche Passgenauigkeit zwischen den einzelnen Fahrzeugteilen zu erzielen. Dementsprechend sind solche Fahrzeugteile üblicherweise derart ausgebildet, dass ein vorgebbarer Justagebereich vorgesehen ist, um ein Fahrzeugteil in die restliche Fahrzeugstruktur einzupassen. Dies wird üblicherweise mit Hilfe von einstellbaren Verbindungsmitteln und/oder Befestigungspunkten erreicht.

Häufig muss ein Monteur mehrere Justageversuche auf der Basis von "Try and Error" unternehmen, um ein Fahrzeugteil relativ zu einem anderen zu positionieren, und somit die bestmögliche Passgenauigkeit zu erzielen, bevor das Fahrzeugteil an der Fahrzeugstruktur befestigt werden kann. Beispielsweise ist die Justage bzw. Ausrichtung der Seitenverkleidung relativ zur Motorhaube bei der Montage von landwirtschaftlichen Traktoren problematisch, da der Übergang zwischen Seitenverkleidung und Motorhaube deutlich sichtbar ist. Um eine erforderliche Justage zwischen Seitenverkleidung und Motorhaube durchzuführen, wurden bislang Schlitze in den Befestigungsflanschen der Seitenverkleidung verwendet. Zur Montage zwischen Seitenverkleidung und Motorhaube musste die Seitenverkleidung zunächst in einer vorübergehenden Justageposition befestigt bzw. gehalten werden. Sodann wurde die Motorhaube geschlossen und die relative Ausrichtung der Bauteile wurde überprüft. Falls eine Veränderung der Position der Seitenverkleidung erforderlich war, wurde die Motorhaube geöffnet, die Seitenverkleidung wurde gelöst und in ihrer Position verändert und wieder befestigt. Die Motorhaube wurde dann wieder geschlossen und die relative Ausrichtung der Bauteile wurde erneut überprüft. Falls noch eine weitere Justage erforderlich war wurde dieser Vorgang so oft wiederholt, bis eine akzeptable Ausrichtung bzw. Passgenauigkeit erzielt wurde. Da jedes Mal die Bauteile befestigt und gelöst wurden, waren sowohl Befestigungselement als auch das Metallblech eine Belastung und/oder Verformung ausgesetzt. Die Montage samt Justage war zeitaufwendig.

Die der Erfindung zugrunde liegende Aufgabe wird darin gesehen, eine Vorrichtung der eingangs genannten Art anzugeben, durch die die vorgenannten Probleme überwunden werden. Insbesondere soll eine Vorrichtung angegeben und weitergebildet werden, die bei der relativen Ausrichtung mehrerer Bauteile eine möglichst optimale Passung bzw. Passgenauigkeit ermöglicht, ohne jedenfalls die entsprechenden Bauteile wiederholt aneinander befestigen und lösen zu müssen.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Die erfindungsgemäße Vorrichtung zur Justage und zur vorübergehenden Halterung eines Befestigungselements ist insbesondere für Plastikteile vorgesehen. Die Vorrichtung umfasst eine im Wesentlichen länglich ausgebildete Ausnehmung und mindestens ein Halteelement. Die Ausnehmung weist eine Begrenzungswand auf. Ein Halteelement weist eine erste Wand mit mehreren darin ausgebildeten Vertiefungen und Erhöhungen auf. Die erste Wand des Halteelements bildet eine weitere Wand der Ausnehmung. Ein Befestigungselement ist in die Ausnehmung einführbar und in einer der Vertiefungen von einem Halteelement vorübergehend haltbar. Ein Halteelement ist von seiner Ausgangsposition auslenkbar, wenn das Befestigungselement entlang der Ausnehmung bewegt wird, um dem Befestigungselement eine Bewegung über eine der Erhöhungen in einer der benachbarten Vertiefungen zu ermöglichen.

Ganz besonders bevorzugt ist ein Federelement vorgesehen, welches benachbart zu einem Halteelement angeordnet ist oder damit in Eingriff kommen kann. Das Federelement stellt eine Federkraft zur Verfügung, um ein Halteelement in seine Ausgangsposition zu bringen. Das Federelement könnte derart angeordnet und/oder ausgebildet sein, dass es verformt oder ausgelenkt wird, wenn ein Halteelement von seiner Ausgangsposition ausgelenkt wird.

Ausgehend von einem Betriebszustand der Vorrichtung, in welchem das Halteelement sich in seiner Ausgangsposition befindet, ist von einer Vertiefung und der Begrenzungswand der Ausnehmung ein Durchmesser definiert, welcher im Wesentlichen einem Durchmesser des Befestigungselements entspricht. Hierunter ist insbesondere zu verstehen, dass der lotrechte Abstand zwischen der Begrenzungswand und einer Stelle einer Vertiefung, die den größten Abstand zur Begrenzungswand aufweist, im Wesentlichen dem Durchmesser des Befestigungselements entspricht.

Bevorzugt weist das Federelement einen dünnen Streifen auf. Der Streifen ist vorzugsweise aus Metall gefertigt und/oder im Wesentlichen bogenförmig angeordnet oder ausgebildet. Insbesondere ist ein Abschnitt des Bogens des Federelements benachbart zu einem Halteelement angeordnet.

Damit ein Halteelement sich in der Ausnehmung bewegen kann, könnte ein Halteelement einen Verjüngungsbereich und einen Hauptkörperbereich aufweisen. Der Hauptkörperbereich weist die erste Wand mit den Vertiefungen und den Erhöhungen auf. Der Verjüngungsbereich ist flexibel oder elastisch ausgebildet, um einen elastischen Gelenk- oder Biegebereich für den Hauptkörperbereich zu bilden. Bevorzugt ist das Halteelement in dem Verjüngungsbereich dann verbiegbar, wenn das Befestigungselement in seiner Position zum Hinwegbewegen über eine Erhöhung verändert wird, wodurch der Hauptkörperbereich eines Halteelements in Kontakt mit dem Federelement kommen kann.

Ganz besonders bevorzugt sind zwei Halteelemente vorgesehen. Die Sollposition des Befestigungselements könnte mittig in der Ausnehmung und/oder benachbart zu den zwei Halteelementen vorgesehen sein.

Insbesondere für Anwendungen in der Montage von Fahrzeugteilen könnte die Ausnehmung in einem ersten Bauteil vorgesehen sein. Dieses Bauteil könnte aus Metallblech oder aus Plastik ausgeführt sein. Das Befestigungselement könnte an einem zweiten Bauteil befestigbar sein. Es ist ein Justagebereich zwischen dem ersten Bauteil und dem zweiten Bauteil vorgesehen. Die Länge der Ausnehmung könnte im Wesentlichen dem Justagebereich zwischen dem ersten Bauteil und dem zweiten Bauteil entsprechen.

Die erfindungsgemäße Vorrichtung könnte derart ausgebildet sein, dass das Ausüben einer temporären Kraft auf das erste oder das zweite Bauteil ausreicht, um das Befestigungselement in eine Position zu verbringen, in welcher das Befestigungselement sich in einer zur Ausgangsposition benachbarten Vertiefung befindet. Das Befestigungselement ist von dem Halteelement und ggf. dem Federelement in dieser Position zumindest vorübergehend haltbar/arretierbar, wobei das Befestigungselement durch das Ausüben einer weiteren temporären Kraft auf das erste oder das zweite Bauteil in eine andere benachbarten Vertiefung verbringbar ist. Somit ist eine Justage zwischen dem ersten und dem zweiten Bauteil ohne ein Entfernen des Befestigungselements möglich.

Durch das Vorsehen der erfindungsgemäßen Vorrichtung bei der Montage mehrerer Bauteile aneinander ist es nunmehr nicht erforderlich, zur Justage die einzelnen Bauteile wiederholt aneinander zu befestigen und zu lösen, so dass in ganz besonders vorteilhafter Weise eine Belastung bzw. Verformung der Bauteile lediglich aufgrund der Justage weitgehend vermieden werden kann. Auch muss das Befestigungselement während der Justage nicht entfernt und wieder eingeführt werden oder fällt gar aus der vorgesehenen Aufnahme heraus. Letztendlich kann hierdurch in ganz besonders vorteilhafter Weise die Montagezeit verringert werden.

Gemäß einer bevorzugten Ausführungsform umfasst die erfindungsgemäße Vorrichtung eine längliche Apertur bzw. einen länglichen Schlitz, zwei Halteelemente und ein Federelement. Eine Wand des länglichen Schlitzes umfasst eine Vielzahl von Vertiefungen und Erhöhungen. Diese Wand ist zugleich eine Wand eines Halteelements. Die Halteelemente sind spiegelbildlich zueinander angeordnet und weisen einen breiten Hauptkörperbereich und einen schmalen Verjüngungsbereich auf. Die Vorrichtung ist derart ausgebildet, dass sie bei Plastikmaterialien verwendet werden kann und ist derart dimensioniert, dass ein Verjüngungsbereich eines Halteelements als Biegegelenk dient, um ein Verbiegen bzw. eine Bewegung der Hauptkörperbereiche innerhalb der Apertur zu ermöglichen. Das Federelement ist benachbart zu den Halteelementen angeordnet und umfasst einen dünnen Metallstreifen, welcher bogenförmig ausgebildet ist und welcher sich verformt, wenn einer der Halteelemente weit genug ausgelenkt wird und mit dem Federelement in Kontakt kommt. Die Bogenform des Federelements drängt das Halteelement dann zurück in seine Ausgangsposition. Ein Befestigungselement kann zu Montage- und Justagezwecken in die Apertur eingeführt und innerhalb der Apertur bewegt werden, wodurch das Befestigungselement in dem Schlitz über eine oder mehrere Erhöhungen hinwegbewegt wird. Falls das Befestigungselement über eine Erhöhung hinwegbewegt wird, verbiegt sich das Halteelement hauptsächlich in seinem Verjüngungsbereich und wird mit dem Federelement in Kontakt gebracht, welches hierdurch ausgelenkt wird. Wenn das Befestigungselement über die Erhöhung in eine hierzu benachbarte Vertiefung bewegt wird, kann das Halteelement in seine Ausgangsposition zurückkehren, wobei es von dem Federelement unterstützt wird. Die Federkraft bzw. die Elastizität der Halteelemente und des Federelements sind ausreichend, um das Befestigungselement in einer gewählten Position vorübergehend zu halten, bis eine ausreichende Kraft aufgewandt wird, um das Befestigungselement in eine andere Position zu verbringen. Das Befestigungselement kann in der Apertur in unterschiedliche Positionen verbracht und dort vorübergehend gehalten werden, um eine optimierte Passgenauigkeit zwischen zu montierenden Bauteilen einzustellen bzw. zu finden, bevor das Befestigungselement vollends gesichert wird.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigen jeweils in einer schematischen Darstellung:
- Fig. 1: eine Seitenansicht eines Ausführungsbeispiels einer erfindungsgemäßen Vorrichtung zur Justage und zur vorübergehenden Halterung, welche eine Ausnehmung aufweist,
- Fig. 2: eine Ansicht der Vorrichtung aus Fig. 1 mit einem entsprechenden Befestigungsmittel, welches in der Ausnehmung angeordnet ist,
- Fig. 3: eine Ansicht der Vorrichtung aus Fig. 2, bei welcher das Befestigungsmittel von einer Position in eine andere übergeht,
- Fig. 4: eine Ansicht der Vorrichtung aus Fig. 2 mit dem Befestigungsmittel in einer anderen Position,
- Fig. 5: eine perspektivische Ansicht mehrerer zusammengesetzter Bauteile, wobei ein Bauteil eine erfindungsgemäße Vorrichtung zur Justage und zur vorübergehenden Halterung aufweist und
- Fig. 6: eine Schnittansicht der zusammengesetzten Bauteile aus Fig. 5 entlang der Linie 6-6.

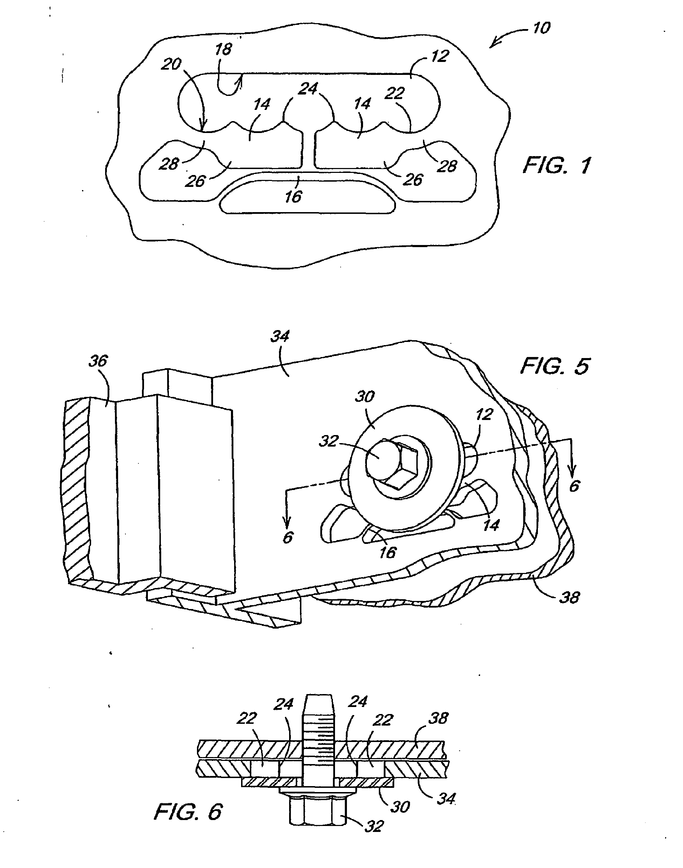

In den Fig. sind der gleiche oder ähnliche Bauteile mit denselben Bezugszeichen gekennzeichnet. In den Fig. 1 bis 4 ist jeweils die erfindungsgemäße Vorrichtung zur Justage eines Bauteils relativ zu einem anderen Bauteil und zur vorübergehenden Halterung eines Befestigungselements 32 mit dem Bezugszeichen 10 gekennzeichnet. Gemäß Fig. 1 umfasst die Vorrichtung 10 eine im Wesentlichen länglich ausgebildete Öffnung, Apertur, Ausnehmung, Aussparung oder einen Schlitz 12, zwei in Form von Haltearmen 14 ausgebildete Halteelemente und ein Federelement 16. Der länglich ausgebildete Schlitz 12 umfasst eine geradlinig ausgebildete obere Wand 18 und eine untere Wand 20, welche Bogenabschnitte in Form einer Vielzahl von Mulden bzw. Vertiefungen 22 und Vorsprünge bzw. Erhöhungen 24 aufweist, welche an einer oberen Wand der Haltearme 14 vorgesehen sind. Die Haltearme 14 sind im Wesentlichen spiegelbildlich zueinander ausgebildet und angeordnet und weisen jeweils einen relativ breiten Hauptkörperbereich 26 und einen hierzu relativ schmalen Verjüngungsbereich 28 auf.

Da die Vorrichtung 10 hauptsächlich zur Verwendung von thermoplastischen und duroplastischen Materialien vorgesehen ist, dienen die Verjüngungsbereiche 28 der Haltearme 14 als elastische Gelenk- oder Biegebereiche, welche ein Biegen bzw. eine Bewegung des Hauptkörperbereichs 26 in der Vorrichtung 10 ermöglichen. Ein Federelement 16 ist an oder in der Vorrichtung 10 vorgesehen, welches gemäß den Fig. 1 bis 4 unterhalb der Haltearme 14 angeordnet ist. Das Federelement 16 umfasst einen dünnen Streifen eines Materials und ist im Wesentlichen bogenförmig ausgebildet. Das Material, aus welchen das Federelement besteht, ist dünn genug, um sich zu verformen bzw. zu verbiegen, wenn einer der Haltearme 14 weit genug nach unten gebogen oder ausgelenkt wird und hierbei mit dem Federelement 16 in Kontakt bzw. in Eingriff kommt. Die Bogenform des Federelements 16 drängt das Federelement 16 in seine ursprüngliche Stellung und drängt hierbei die Haltearme 14 in ihre ursprüngliche Stellung bzw. Ausgangsstellung.

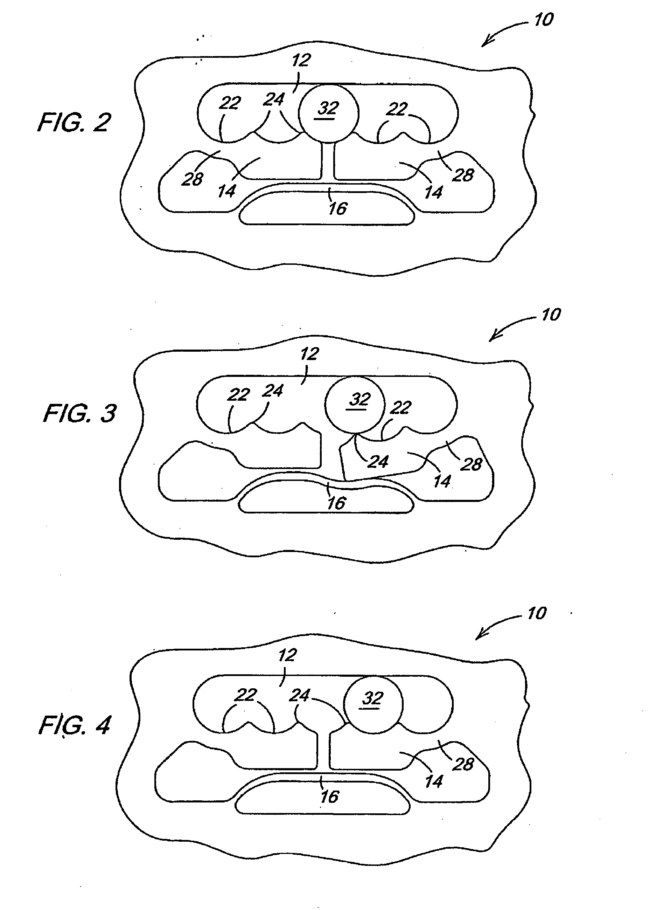

Den Fig. 2 bis 4 ist die Funktionsweise der erfindungsgemäßen Vorrichtung 10 zur Justage und zur vorübergehenden Halterung entnehmbar. Im Konkreten ist in Fig. 2 die Vorrichtung 10 mit einem darin eingeführten Befestigungselement 32 gezeigt. Der Durchmesser des Befestigungselements 32 entspricht im Wesentlichen den Durchmessern, welche von den Vertiefungen 22 in Verbindung mit der oberen Wand 18 gebildet ist. Sollte es erforderlich sein, das Befestigungselement 32 zum Zwecke der Einstellung bzw. Justage in seiner Position zu verändern, wird das Befestigungselement 32 ganz einfach in horizontaler Richtung - vorzugsweise gleitend - verschoben bzw. bewegt, so dass das Befestigungselement 32 über eine oder mehrere Erhöhung(en) 24 hinwegbewegt wird. Fig. 3 ist entnehmbar, dass beim Hinwegbewegen des Befestigungselements 32 über die Erhöhung 24 sich der Haltearm 14 an seinem Verjüngungsbereich 28 verbiegt, so dass der Haltearm 14 nach unten ausgelenkt wird. Hierbei kommt der Haltearm 14 eventuell mit dem Federelement 16 in Kontakt, was eine Verformung des Federelements 16 bewirkt. Falls - wie in Fig. 4 gezeigt - das Befestigungselement 32 über die Erhöhung 24 bewegt wurde und in der benachbarten Vertiefung 22 positioniert ist, kann der Haltearm 14 zurück in seine Ausgangsposition auslenken. Zusätzlich kann der Haltearm 14 von dem Federelement 16 nach oben gedrängt werden.

Das Ausmaß bzw. die Länge des Schlitzes 12 und die Anzahl der Vertiefungen 22 ist durch den erforderlichen Justagebereich für eine bestimmte Anwendung vorgegeben, wobei üblicherweise die Mitte des Schlitzes die gewünschte oder vorgegebene Justageposition bzw. Sollposition darstellt. Die Elastizität oder Federkonstante der Haltearme 14 und des Federelements 16 sind derart gewählt, dass eine ausreichende Kraft zur Verfügung gestellt wird, um das Befestigungselement 32 in einer gewählten Position vorläufig zu halten, bis eine größere Kraft ausgeübt wird, um das Befestigungselement 32 in eine andere Position zu verbringen. Dementsprechend kann das Befestigungselement 32 zu verschiedenen Positionen in dem Schlitz 12 gebracht und dort gehalten werden, um eine optimale Einstellung zu finden, bevor das Befestigungselement 32 endgültig befestigt wird. Sobald diese optimale Einstellung gefunden ist, kann das Befestigungselement 32 entsprechend angezogen bzw. festgeschraubt werden, wodurch eine weitere Bewegung in dem Schlitz 12 vermieden wird.

Im Folgenden wird eine konkrete Anwendung beschrieben, bei welcher eine Motorhaube bzw. Haube 36 - in den Fig. nur teilweise gezeigt - eines in den Figuren nicht gezeigten Traktors mit einer Seitenverkleidung 34 an einer - beispielsweise an einem Fahrzeugrahmen des Traktors angeordneten - Trägerstruktur 38 zu montieren ist. Die Seitenverkleidung 34 ist ein durch Spritzgussverfahren hergestelltes Plastikteil, welches eine Vorrichtung 10 aufweist. Die Seitenverkleidung 34 ist außerhalb der in den Fig. nicht gezeigten Fahrzeugkabine angeordnet und dient unter anderem auch als Anschlag bzw. Auflage für die Haube 36 im geschlossenen Zustand. Gemäß den Fig. 5 und 6 ist das Befestigungselement 32 mit einer Unterlegscheibe 30 in den Schlitz 12 der Vorrichtung 10 in der mittleren Position bzw. Sollposition eingeführt. Das Befestigungselement 32 wird dann in eine Gewindebohrung in einem Metallblech der Trägerstruktur 38 eingeschraubt, um die Seitenverkleidung 34 an dem Fahrzeug zu halten. Das Befestigungselement 32 wird hierbei noch nicht angezogen bzw. festgelegt. Als nächstes wird die Haube 36 installiert und geschlossen und die Position der Seitenverkleidung 34 relativ zu der Haube 36 wird eingestellt oder justiert, wobei eine Kraft bzw. Druck auf die äußere Oberflächen der Seitenverkleidung 34 ausgeübt wird, so dass die Seitenverkleidung 34 relativ zu der Trägerstruktur 38 bewegt wird. Wenn eine Kraft auf die Seitenverkleidung 34 ausgeübt wird, wird das Befestigungselement 32 von seiner ursprünglichen Sollposition über eine benachbarte Erhöhung 24 eines Haltearms 14 wegbewegt. Hierbei lenkt das Befestigungselement 32 einen der Haltearme 14 und das Federelement aus (vergleiche Fig. 3), bis das Befestigungselement 32 sich in einer der benachbarten Vertiefungen 22 befindet, wobei der Haltearm 14 dann in seiner Ausgangs- beziehungsweise Sollposition - gegebenenfalls mit Hilfe des Federelements 16 - zurückgedrängt wird. Sodann kann eine weitere Kraft auf die Seitenverkleidung 34 ausgeübt werden, um das Befestigungselement in eine hierzu benachbarte Vertiefung 22 zu bewegen, bis nämlich eine optimale Einstellung zwischen der Seitenverkleidung 34 und der Haube 36 erzielt ist. Wenn die Einstellung zwischen Seitenverkleidung 34 und Haube 36 akzeptabel ist, rasten bzw. haltern der Haltearm 14 und ggf. das Federelement 16 das Befestigungselement 32 in der Vorrichtung 10 in Position, bis die Haube 36 angehoben und eine endgültige Befestigung der Seitenverkleidung 34 an der Trägerstruktur 38 erfolgt. Hierzu könnte das in Form einer Schraube ausgebildete Befestigungselement 32 mit einem vorgegebenen Drehmoment angezogen werden. Somit kann eine Justage zwischen Seitenverkleidung 34 und Haube 36 ohne mehrere Einstellungsversuche durchgeführt werden, wodurch auch ein vermehrtes Beaufschlagen der Bauteile bzw. Plastikkomponenten mit Druck oder einem Drehmoment vermieden werden kann.

Abschließend sei ganz besonders darauf hingewiesen, dass die voranstehend erörterten Ausführungsbeispiele lediglich zur Beschreibung der beanspruchten Lehre dienen, diese jedoch nicht auf die Ausführungsbeispiele einschränken.

## Patentansprüche

1. Vorrichtung zur Justage eines Bauteils relativ zu einem anderen Bauteil und zur vorübergehenden Halterung, insbesondere für Plastikteile, mit einer im Wesentlichen länglich ausgebildeten Ausnehmung (12) und mindestens einem Halteelement (14), wobei die Ausnehmung (12) eine Begrenzungswand (18) aufweist, wobei ein Halteelement (14) eine erste Wand (20) mit mehreren darin ausgebildeten Vertiefungen (22) und Erhöhungen (24) aufweist, wobei die erste Wand (20) des Halteelements (14) eine weitere Wand der Ausnehmung (12) bildet, **dadurch gekennzeichnet, daß** ein Befestigunselement (32) in die Ausnehmung (12) einführbar und in einer der Vertiefungen (22) von einem Halteelement (14) vorübergehend haltbar ist, wobei ein Halteelement (14) von seiner Ausgangsposition auslenkbar ist, wenn das Befestigungselement (32) entlang der Ausnehmung (12) bewegt wird, um dem Befestigungselement (32) eine Bewegung über eine der Erhöhungen (24) in einer der benachbarten Vertiefungen (22) zu ermöglichen.

2. Vorrichtung nach Anspruch 1, wobei ein Federelement (16) vorgesehen ist, welches benachbart zu einem Halteelement (14) angeordnet ist, wobei das Federelement (16) eine Federkraft zur Verfügung stellt, um ein Halteelement (14) in seine Ausgangsposition zu bringen.

3. Vorrichtung nach Anspruch 2, wobei das Federelement (16) derart angeordnet und/oder ausgebildet ist, dass es verformt oder ausgelenkt wird, wenn ein Halteelement (14) von seiner Ausgangsposition ausgelenkt wird.

4. Vorrichtung nach einem der Ansprüche 1 bis 3, wobei von einer Vertiefung (22) und der Begrenzungswand (18) der Ausnehmung (12) ein Durchmesser definiert ist, welcher im Wesentlichen einem Durchmesser des Befestigungselements (32) entspricht, insbesondere wenn das Halteelement (14) sich in seiner Ausgangsposition befindet.

5. Vorrichtung nach einem der vorhergehenden Ansprüche, wobei das Federelement (16) einen dünnen Streifen aufweist, welcher vorzugsweise aus Metall gefertigt ist und/oder welcher im Wesentlichen bogenförmig angeordnet ist, wobei zumindest ein Abschnitt des Bogens benachbart zu einem Halteelement (14) angeordnet ist.

6. Vorrichtung nach einem der vorhergehenden Ansprüche, wobei ein Halteelement (14) einen Verjüngungsbereich (28) und einen Hauptkörperbereich (26) aufweist, wobei der Hauptkörperbereich (26) die erste Wand (20) mit den Vertiefungen (22) und den Erhöhungen (24) aufweist, und wobei der Verjüngungsbereich (28) flexibel oder elastisch ausgebildet ist, um einen elastischen Gelenk- oder Biegebereich für den Hauptkörperbereich (26) zu bilden.

7. Vorrichtung nach Anspruch 6, wobei das Halteelement (14) in dem Verjüngungsbereich (28) verbiegbar ist, wenn das Befestigungselement (32) in seiner Position zum Hinwegbewegen über eine Erhöhung (24) verändert wird, wodurch der Hauptkörperbereich (26) eines Halteelements (14) in Kontakt mit dem Federelement (16) kommen kann.

8. Vorrichtung nach einem der vorhergehenden Ansprüche, wobei zwei Halteelemente (14) vorgesehen sind und wobei vorzugsweise die Sollposition des Befestigungselements (32) mittig in der Ausnehmung (12) und/oder benachbart zu den zwei Halteelementen (14) vorgesehen ist.

9. Vorrichtung nach einem der vorhergehenden Ansprüche, wobei die Ausnehmung (12) in einem - vorzugsweise aus Plastik ausgeführten - ersten Bauteil (34) vorgesehen ist, wobei das Befestigungselement (32) an einem zweiten Bauteil (38) befestigbar ist, wobei ein Justagebereich zwischen dem ersten Bauteil (34) und dem zweiten Bauteil (38) vorgesehen ist und wobei vorzugsweise die Länge der Ausnehmung (12) im Wesentlichen dem Justagebereich zwischen dem ersten Bauteil (34) und dem zweiten Bauteil (38) entspricht.

10. Vorrichtung nach Anspruch 9, wobei das Ausüben einer temporären Kraft auf das erste oder das zweite Bauteil (34, 38) ausreicht, um das Befestigungselement (32) in eine Position zu verbringen, in welcher das Befestigungselement (32) sich in einer zur Ausgangsposition benachbarten Vertiefung (22) befindet, wobei das Befestigungselement (32) von dem Halteelement (14) und ggf. dem Federelement (16) in dieser Position haltbar ist, wobei das Befestigungselement (32) durch das Ausüben einer weiteren temporären Kraft auf das erste oder das zweite Bauteil (34, 38) in eine andere benachbarten Vertiefung (22) verbringbar ist, wodurch eine Justage zwischen dem ersten und dem zweiten Bauteil (34, 38) ohne ein Entfernen des Befestigungselements (32) möglich ist.

## Claims

1. Apparatus for the adjustment of a structural part relative to another structural part and for temporary holding, in particular for plastics parts, comprising a recess (12) of substantially elongated configuration and at least one holding element (14), wherein the recess (12) has a boundary wall (18), wherein a holding element (14) has a first wall (20) having a plurality of therein configured depressions (22) and elevations (24), and wherein the first wall (20) of the holding element (14) forms a further wall of the recess (12), **characterized in that** a fastening element (32) can be introduced into the recess (12) and can be temporarily held in one of the depressions (22) by a holding element (14), a holding element (14) being able to be deflected from its starting position when the fastening element (32) is moved along the recess (12) in order to allow the fastening element (32) to move over one of the elevations (24) into one of the adjacent depressions (22).

2. Apparatus according to Claim 1, wherein a spring element (16) is provided which is disposed adjacent to a holding element (14), the spring element (16) providing a spring force in order to bring a holding element (14) into its starting position.

3. Apparatus according to Claim 2, wherein the spring element (16) is arranged and/or configured in such a way that it is deformed or deflected when a holding element (14) is deflected from its starting position.

4. Apparatus according to one of Claims 1 to 3, wherein a depression (22) and the boundary wall (18) of the recess (12) define a diameter which substantially corresponds to a diameter of the fastening element (32), in particular when the holding element (14) is in its starting position.

5. Apparatus according to one of the preceding claims, wherein the spring element (16) has a thin strip, which is preferably made of metal and/or which is arranged substantially in an arc shape, at least one portion of the arc being disposed adjacent to a holding element (14).

6. Apparatus according to one of the preceding claims, wherein a holding element (14) has a tapered region (28) and a main body region (26), the main body region (26) having the first wall (20) containing the depressions (22) and the elevations (24), and the tapered region (28) being of flexible or elastic configuration in order to form an elastic hinged or bending region for the main body region (26).

7. Apparatus according to Claim 6, wherein the holding element (14) can be bent in the tapered region (28) when the position of the fastening element (32) is altered for moving over an elevation (24), thereby enabling the main body region (26) of a holding element (14) to make contact with the spring element (16).

8. Apparatus according to one of the preceding claims, wherein two holding elements (14) are provided and wherein the desired position of the fastening element (32) is provided centrally in the recess (12) and/or adjacent to the two holding elements (14).

9. Apparatus according to one of the preceding claims, wherein the recess (12) is provided in a - preferably plastics - first structural part (34), wherein the fastening element (32) can be fastened to a second structural part (38), wherein an adjustment region is provided between the first structural part (34) and the second structural part (38), and wherein, preferably, the length of the recess (12) substantially corresponds to the adjustment region between the first structural part (34) and the second structural part (38).

10. Apparatus according to Claim 9, wherein the application of a temporary force to the first or the second structural part (34, 38) is sufficient to transfer the fastening element (32) into a position in which the fastening element (32) is in a depression (22) adjacent to the starting position, wherein the fastening element (32) can be held in this position by the holding element (14) and, if need be, by the spring element (16), wherein the fastening element (32) can be transferred, by the application of a further temporary force to the first or the second structural part (34, 38), into another adjacent depression (22), whereby an adjustment between the first and the second structural part (34, 38) is possible without removal of the fastening element (32).

## Revendications

1. Dispositif pour l'ajustement d'une pièce par rapport à une autre pièce et pour la fixation temporaire, en particulier pour des pièces en matière plastique, comportant un évidement (12) de forme sensiblement allongée et au moins un élément de retenue (14), l'évidement (12) comportant une paroi de délimitation (18), un élément de retenue (14) comportant une première paroi (20) avec plusieurs creux (22) et bosses (24), réalisés dans celle-ci, la première paroi (20) de l'élément de retenue (14) formant une autre paroi de l'évidement (12), **caractérisé en ce qu'**un élément de fixation (32) peut être introduit dans l'évidement (12) et peut être maintenu temporairement dans l'un des creux (22) par un élément de retenue (14), un élément de retenue (14) pouvant être dévié hors de sa position initiale lorsque l'élément de fixation (32) est déplacé le long de l'évidement (12) afin de permettre à l'élément de fixation (32) d'effectuer un mouvement au-dessus de l'une des bosses (24) vers un des creux (22) adjacents.

2. Dispositif selon la revendication 1, dans lequel il est prévu un élément de ressort (16) qui est adjacent à un élément de retenue (14), l'élément de ressort (16) fournissant une force de ressort pour amener un élément de retenue (14) dans sa position initiale.

3. Dispositif selon la revendication 2, dans lequel l'élément de ressort (16) est agencé et/ou réalisé de telle sorte qu'il est déformé ou dévié lorsqu'un élément de retenue (14) est dévié hors de sa position initiale.

4. Dispositif selon l'une quelconque des revendications 1 à 3, dans lequel un creux (22) et la paroi de délimitation (18) de l'évidement (12) définissent un diamètre qui correspond sensiblement au diamètre de l'élément de fixation (32), en particulier lorsque l'élément de retenue (14) se situe dans sa position initiale.

5. Dispositif selon l'une quelconque des revendications précédentes, dans lequel l'élément de ressort (16) comporte une bande mince, qui est réalisée de préférence en métal et/ou qui est agencée sensiblement en forme de courbe, au moins une partie de la courbe étant adjacente à un élément de retenue (14).

6. Dispositif selon l'une quelconque des revendications précédentes, dans lequel un élément de retenue (14) comporte une zone rétrécie (28) et un corps principal (26), le corps principal (26) comportant la première paroi (20) avec les creux (22) et les bosses (24), et la zone rétrécie (28) étant flexible ou élastique pour former une zone d'articulation ou de flexion pour le corps principal (26).

7. Dispositif selon la revendication 6, dans lequel l'élément de retenue (14) est flexible dans la zone rétrécie (28), lorsque l'élément de fixation (32) change de position pour se déplacer au-dessus d'une bosse (24), à la suite de quoi le corps principal (26) d'un élément de retenue (14) peut venir en contact avec l'élément de ressort (16).

8. Dispositif selon l'une quelconque des revendications précédentes, dans lequel deux éléments de retenue (14) sont prévus et dans lequel de préférence la position de consigne de l'élément de fixation (32) est prévue au centre dans l'évidement (12) et/ou à proximité des deux éléments de retenue (14).

9. Dispositif selon l'une quelconque des revendications précédentes, dans lequel l'évidement (12) est prévu dans une première pièce (34) - réalisée de préférence en matière plastique -, l'élément de fixation (32) pouvant être fixé contre une deuxième pièce (38), une zone d'ajustement étant prévue entre la première pièce (34) et la deuxième pièce (38) et la longueur de l'évidement (12) correspondant de préférence sensiblement à la zone d'ajustement entre la première pièce (34) et la deuxième pièce (38).

10. Dispositif selon la revendication 9, dans lequel l'application d'une force temporaire sur la première ou la deuxième pièce (34, 38) suffit pour amener l'élément de fixation (32) dans une position, dans laquelle l'élément de fixation (32) se situe dans un creux (22) adjacent à la position initiale, l'élément de fixation (32) pouvant être maintenu dans cette position par l'élément de retenue (14) et, le cas échéant, l'élément de ressort (16), l'élément de fixation (32) pouvant être amené dans un autre creux (22) adjacent sous l'effet de l'application d'une autre force temporaire sur la première ou la deuxième pièce (34, 38), moyennant quoi un ajustement entre la première et la deuxième pièces (34, 38) est possible sans retirer l'élément de fixation (32).
